# EUROPÄISCHE PATENTSCHRIFT

(11) **EP 3 807 912 B1**
(45) Veröffentlichungstag und Bekanntmachung des Hinweises auf die Patenterteilung: **01.06.2022**
(21) Anmeldenummer: 19731631.8
(22) Anmeldetag: 07.06.2019
(51) Int. Cl.: H01F 27/32, H01F 27/28, H01B 7/30, H01B 3/48, H01B 3/52, H02K 3/14, H02K 3/34, H02K 3/40

(54) **MEHRFACHPARALLELLEITER MIT DISTANZPLÄTTCHEN**
MULTIPLE PARALLEL CONDUCTOR WITH SPACER PLATES
CONDUCTEUR PARALLÈLE MULTIPLE À PLAQUETTES D'ÉCARTEMENT

(30) Priorität: 12.06.2018 AT 504652018
(43) Veröffentlichungstag der Anmeldung: 21.04.2021
(73) Patentinhaber: Asta Elektrodraht GmbH, 2755 Oed/Wiener Neustadt (AT)
(72) Erfinder: TRIMMEL, Thomas, 2840 Grimmenstein (AT)
(74) Vertreter: Patentanwälte Pinter & Weiss OG
(86) Internationale Anmeldenummer: PCT/EP2019/064940
(87) Internationale Veröffentlichungsnummer: WO 2019/238558

(56) Entgegenhaltungen:
- WO-A1-94/07251
- WO-A1-95/30991
- CH-A5- 635 701
- DE-A1- 2 410 458
- GB-A- 1 103 764

## Beschreibung

Die gegenständliche Erfindung betrifft einen Mehrfachparallelleiter mit einer Mehrzahl von verdrillten, isolierten Einzelleitern, wobei die Einzelleiter in mehreren nebeneinander angeordneten Teilleiterbündeln übereinander angeordnet sind und die Verwendung des Mehrfachparallelleiters zur Herstellung einer Wicklung einer elektrischen Maschine. Die Erfindung betrifft ferner ein Verfahren zur Herstellung eines Mehrfachparallelleiters mit einer Mehrzahl von verdrillten, isolierten Einzelleitern und mit Distanzplättchen.

Für die Herstellung von Wicklungen für elektrische Maschinen, wie beispielsweise Transformatoren, werden häufig sogenannte kontinuierliche Mehrfachparallelleiter verwendet. Solche Mehrfachparallelleiter bestehen aus einer Vielzahl von einzelnen, lackisolierten Einzelleiter, die in mehreren Einzelleiterbündeln nebeneinander geordnet sind und wobei die Einzelleiter nebeneinander angeordneter Einzelleiterbündel nach einem vorgegebenen Schema verdrillt werden. Im Wesentlichen tauschen beim Verdrillen in vorgegebenen Abständen jeweils die obersten und untersten Einzelleiter eines Einzelleiterbündels in umgekehrter Richtung in das jeweils benachbarte Einzelleiterbündel, wodurch sich diese Einzelleiter überkreuzen und die Anzahl der Einzelleiter in den verschiedenen Einzelleiterbündeln gleich bleibt. Der Mehrfachparallelleiter wird zum mechanischen Schutz und der Stabilität oder zur Isolation des Mehrfachparallelleiters oftmals mit einer äußeren Umwicklung, beispielsweise einer Bündelisolierung, wie zum Beispiel in Form einer Papierumwicklung oder eine Gitterbandumwicklung, versehen. Mehrfachparallelleiter werden in großen Längen gefertigt und auf Rollen aufgewickelt. Zur Verarbeitung werden diese von der Rolle abgewickelt und einem Verarbeitungsprozess zugeführt. Eine Umwicklung, insbesondere eine Papierumwicklung, kann vor der Verwendung auch entfernt werden. Solche Mehrfachparallelleiter sind beispielsweise aus der WO 95/30991 A1 oder der EP0874373 B1 bekannt.

Zur Herstellung einer Wicklung aus einem Mehrfachparallelleiter wird der Mehrfachparallelleiter in bekannter Weise in einer Vielzahl von Wicklungsgängen in axialer Richtung nebeneinander und radial übereinander angeordnet, um die Wicklung der elektrischen Maschine auszubilden. In axialer Richtung werden zwischen nebeneinander angeordneten Mehrfachparallelleitern oftmals Distanzplättchen aus elektrisch isolierendem Material eingelegt, um in der Wicklung einen definierten Kühlkanal auszubilden. In einer Transformatorwicklung wird beispielsweise im Betrieb ein Transformatoröl durch die Kühlkanäle geleitet, um die Wicklung zu kühlen. Diese Distanzplättchen werden dabei beim Wickelvorgang von Hand zwischen die Mehrfachparallelleiter eingelegt, was aufwendig ist und den Wicklungsvorgang erheblich verlangsamt.

Aus der WO 94/07251 A1 ist daher schon bekannt, die Distanzplättchen direkt am Mehrfachparallelleiter anzuordnen. Dabei wird in regelmäßigen Abständen in Längsrichtung des Mehrfachparallelleiters während der Herstellung des Mehrfachparallelleiters ein Distanzplättchen seitlich am Mehrfachparallelleiter angeordnet, das mit einem Gitterband am Mehrfachparallelleiter gehalten wird. Damit kann das zeitraubende manuelle Einlegen der Distanzplättchen beim Herstellen der Wicklung wegfallen, was die Herstellzeit für die Wicklung deutlich reduziert. Die Verwendung von lose am Mehrfachparallelleiter anliegenden Distanzplättchen erschwert aber die Herstellung und auch die Verarbeitung, da die Distanzplättchen leicht verrutschen können. Daher wird in der WO 94/07251 A1 auch angeregt eine mit teilvernetzten Epoxidharz vorimprägniertes Gitterband zur Umwicklung zu verwenden, das nach einer Wärmebehandlung aushärtet und damit für die Handhabung des Mehrfachparallelleiters benötigte Stabilität sorgt. Dadurch werden auch die Distanzplättchen lagefixiert. Die Verwendung eines solchen imprägnierten Gitterbandes erhöht natürlich die Kosten und erhöht auch den Herstellaufwand durch die zusätzliche Wärmebehandlung. Nicht zuletzt können sich durch das ausgehärtete Expoxidharz auch Probleme beim Aufwickeln des Mehrfachparallelleiters auf einer Rolle oder bei der Herstellung der Wicklung der elektrischen Maschine ergeben, da durch die im Harz integrierten Distanzplättchen das Biegen des Mehrfachparallelleiters erschwert werden kann.

Es ist daher eine Aufgabe der gegenständlichen Erfindung einen Mehrfachparallelleiter mit Distanzplättchen anzugeben, der einfach hergestellt werden kann und sicher und einfach weiterverarbeitet werden kann.

Diese Aufgabe wird erfindungsgemäß dadurch gelöst, dass an einer Seitenfläche des Mehrfachparallelleiters in Längsrichtung des Mehrfachparallelleiters ein Band angelegt ist, wobei am Band in Längsrichtung verteilt Distanzplättchen angeordnet sind, und der Mehrfachparallelleiter mit dem Band und den Distanzplättchen mit einer Umwicklung umwickelt ist, wobei das Band direkt an der Seitenfläche des Mehrfachparallelleiters anliegt und die Distanzplättchen außenliegend angeordnet sind, wobei die Höhe der Distanzplättchen größer als die Breite des Bands ist, oder die Distanzplättchen direkt an der Seitenfläche des Mehrfachparallelleiters anliegen und das Band außenliegend angeordnet ist, wobei die Höhe der Distanzplättchen größer als die Breite des Bands ist, oder das Band aus zumindest zwei Teilbändern zusammengesetzt ist und die Distanzplättchen zwischen den Teilbändern angeordnet sind, wobei die Höhe der Distanzplättchen größer als die jeweilige Breite der Teilbänder ist. Weiters wird die Aufgabe durch ein Verfahren zur Herstellung eines Mehrfachparallelleiters mit einer Mehrzahl von verdrillten, isolierten Einzelleitern und mit Distanzplättchen, gelöst, wobei ein Band mit in Längsrichtung verteilt angeordneten Distanzplättchen zur Verfügung gestellt wird, wobei das Band auszumindest zwei Teilbändern zusammengesetzt ist und die Distanzplättchen zwischen den Teilbändern angeordnet sind, wobei die Höhe der Distanzplättchen größer als die jeweilige Breite der Teilbänder ist, das Band mit den Distanzplättchen an einer Seitenfläche des Mehrfachparallelleiters in Längsrichtung angelegt wird, und dann der Mehrfachparallelleiter mit dem Band und den Distanzplättchen mit einer Umwicklung umwickelt wird. Die Anordnung der Distanzplättchen auf einem Band erleichtert die Herstellung des Mehrfachparallelleiters erheblich, da nicht mehr einzelne Distanzplättchen verarbeitet werden müssen. Außerdem sorgt das Band auch dafür, dass sich die Distanzplättchen am Mehrfachparallelleiter auch nicht mehr unkontrolliert verschieben können, womit auch nicht zwingend eine aushärtende Umwicklung verwendet werden muss. Ganz im Gegenteil können sich die lose am Mehrfachparallelleiter anliegenden Distanzplättchen am Band während dem Wicklungsvorgang an die Krümmung der Wicklung anpassen, sodass die Distanzplättchen automatisch im Wesentlich radial ausgerichtet bleiben.

Weitere Merkmale und Vorteile des erfindungsgemäßen Mehrfachparallelleiters ergeben sich aus der folgenden Beschreibung vorteilhafter Ausgestaltungen.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 einen erfindungsgemäßen Mehrfachparallelleiter mit Distanzplättchen,
Fig.2 und 3 Ausführungen eines Bandes mit Distanzplättchen und
Fig.4 eine weitere Ansicht eines erfindungsgemäßen Mehrfachparallelleiters mit Distanzplättchen und außenliegendem Band.

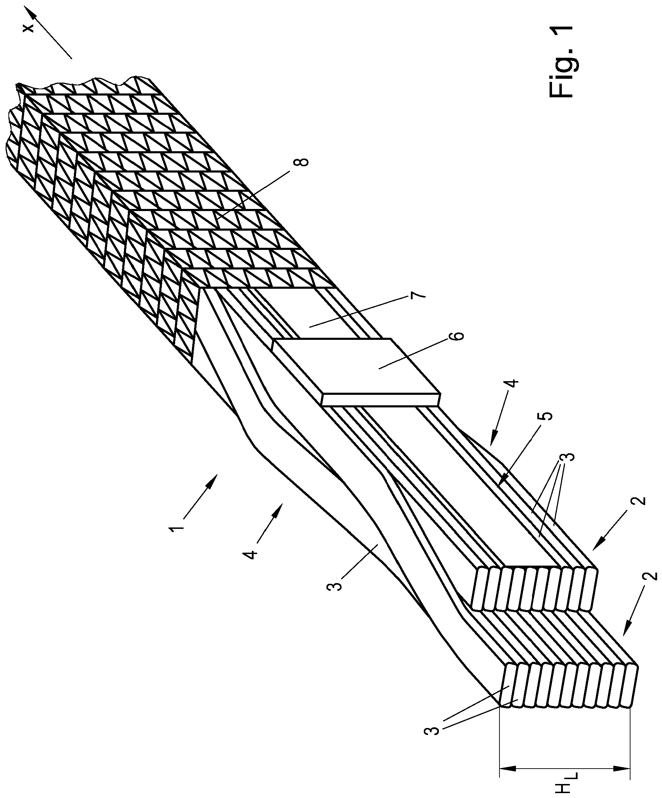

Fig.1 zeigt ein Ausführungsbeispiel eines erfindungsgemäßen Mehrfachparallelleiters 1, der aus mehreren, hier zwei, nebeneinander angeordneten Einzelleiterbündel 2 besteht. In jedem Einzelleiterbündel 2 sind eine Mehrzahl von isolierten, vorzugsweise lackisolierten, Einzelleitern 3 übereinander angeordnet. Die Einzelleiter 3 bzw. die Einzelleiterbündel 2 erstrecken sich in Längsrichtung x über die Länge des Mehrfachparallelleiters 1. Ein Einzelleiter 3 weist üblicherweise einen rechteckigen Querschnitt auf, wobei die Einzelleiter 3 in einem Einzelleiterbündel 2 an den Längsseiten des rechteckigen Querschnittes aneinander liegen.

Es sei jedoch erwähnt, dass ein Einzelleiter 3 selbst wieder aus mehreren isolierten Teilleitern bestehen kann, die in einem Einzelleiter 3 nebeneinander, übereinander oder auch matrixförmig angeordnet sein können. Einen Mehrfachparallelleiter mit solchen Einzelleitern 3 aus Teilleitern ist beispielsweise in der WO 12/113851 A1 oder der WO 12/113853 A1 beschrieben. Solche aus mehreren Teilleitern bestehenden Einzelleiter 3 werden ausdrücklich auch als Einzelleiter 3 im Sinne der Erfindung verstanden.

Jeweils die obersten und untersten Einzelleiter 3 benachbarter Einzelleiterbündel 2 wechseln an in regelmäßigen Abständen entlang der Längsrichtung x des Mehrfachparallelleiters 1 vorgesehenen Verdrillstellen 4 in das jeweils benachbarte Einzelleiterbündel 2, wobei der Wechsel in unterschiedliche Richtungen erfolgt, also beispielsweise oben von links nach rechts und unten von rechts nach links, sodass die Anzahl der Einzelleiter 3 in den Einzelleiterbündel 2 gleich bleibt. Dieser Vorgang ist hinlänglich bekannt und wird im Zusammenhang mit Mehrfachparallelleitern 1 als Verdrillen bezeichnet, oder im Ergebnis als Mehrfachparallelleiter 1 mit verdrillten Einzelleitern 3.

Lediglich zur Orientierung werden die Seiten mit den Verdrillstellen 4 als Oberseite und Unterseite des Mehrfachparallelleiters 1 bezeichnet und die Seiten des Mehrfachparallelleiters 1, die die Oberseite und die Unterseite verbinden, als Seitenflächen 5. Die Seitenflächen 5 werden üblicherweise durch die Schmalseiten der rechteckigen Querschnitte der Einzelleiter 3 gebildet und die Oberseite und Unterseite durch die Längsseiten der rechteckigen Querschnitte der Einzelleiter 3. Die Bezeichnung Oberseite, Unterseite und Seitenfläche hat aber nichts mit einer bestimmten Ausrichtung oder Lage des Mehrfachparallelleiters 1 zu tun und ist auch nicht so zu verstehen.

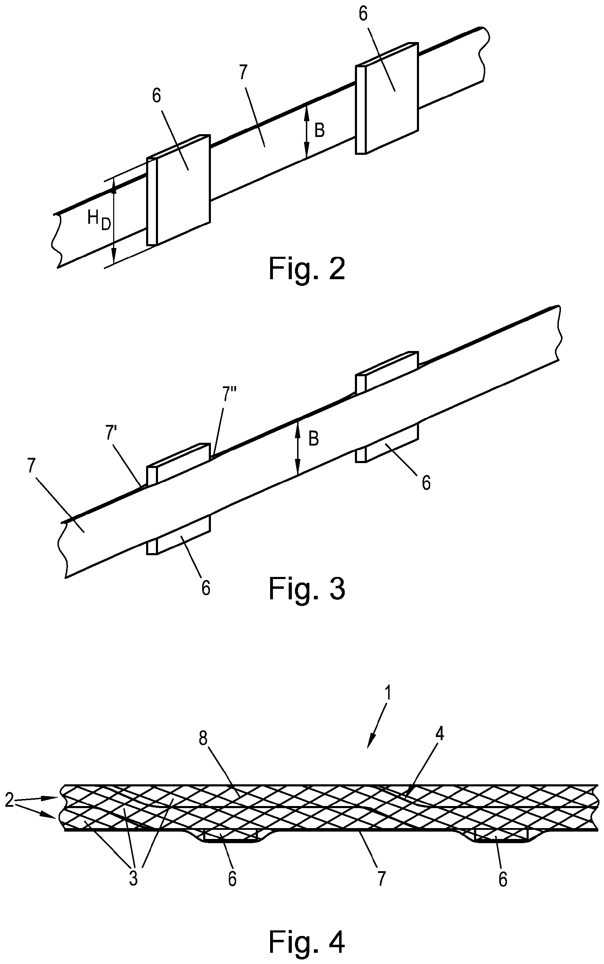

An zumindest einer Seitenfläche 5 des Mehrfachparallelleiters 1 werden nun entlang der Längsrichtung x des Mehrfachparallelleiters 1 in vorgegebenen Abständen Distanzplättchen 6 angeordnet (siehe auch Fig.4). Die Distanzplättchen 6 sind dazu an einem flachen Band 7 befestigt und werden mit dem Band 7 während der Herstellung des Mehrfachparallelleiters 1 am Mehrfachparallelleiter 1 angeordnet. In Fig.2 ist ein solches Band 7 mit den daran angeordneten Distanzplättchen 6 dargestellt. Das Band 7 kann aus einem beliebigen, vorzugsweise elektrisch nichtleitendem, Material, wie beispielsweise Kunststoff oder Papier, gefertigt sein. Das Band 7 ist vorzugsweise biegsam. Die Distanzplättchen 6 sind aus einem elektrisch nichtleitenden Material, beispielsweise Pressspan. Wie die Distanzplättchen 6 am Band 7 befestigt sind spielt für die Erfindung an sich keine Rolle und es kommen beliebige geeignete Verfahren in Frage. Beispielsweise könnten die Distanzplättchen 6 auf das Band 7 geklebt werden.

Ebenso spielt es keine Rolle, ob das Band 7 direkt am Mehrfachparallelleiter 1 anliegt (wie in Fig.1), oder ob die Distanzplättchen 6 direkt am Mehrfachparallelleiter 1 anliegen und das Band 7 außenliegend angeordnet ist (wie in Fig.4).

In einer weiteren möglichen Ausgestaltung besteht das Band 7 aus zumindest zwei Teilbändern 7', 7", zwischen denen die Distanzplättchen 6 angeordnet sind, wobei an jeder Seite der Distanzplättchen 6 zumindest ein Teilband 7', 7" angeordnet ist (Fig.3). Die einander zugewandten Seiten der Teilbänder 7', 7" könnten dabei klebend ausgeführt sein, beispielsweise in Form eines Papierklebebandes, sodass die beiden Teilbänder 7', 7" beim Zusammenpressen zum Band 7 zusammengefügt werden und gleichzeitig die Distanzplättchen 6 dazwischen befestigt werden. Die zugewandten Seiten der Teilbänder 7', 7" müssen aber nicht zwingend selbstklebend sein, sondern die Distanzplättchen 6 können wieder beliebig zwischen den Teilbändern 7', 7" befestigt sein, beispielsweise wieder mittels eines Klebers. Es müssen nicht einmal die Teilbänder 7', 7" aneinander anliegend sein.

Nachdem das Band 7 am Mehrfachparallelleiter 1 angeordnet wurde, wird der Mehrfachparallelleiter 1 in üblicher Weise mit einer Umwicklung 8 versehen, üblicherweise ein Gitterband oder eine Papierumwicklung. Obwohl bei Verwendung eines Gitterbandes als Umwicklung 8, wie in Fig.1 angedeutet, ebenfalls in bekannter Weise ein mit Epoxidharz getränktes Gitterband, das ausgehärtet wird, verwendet werden kann, wird vorzugsweise kein solches mit Epoxidharz getränktes Gitterband für die Umwicklung 8 verwendet.

Die Höhe H_{D} der Distanzplättchen 6 entspricht vorzugsweise der Höhe H_{L} des Mehrfachparallelleiters 1, also der Höhe der Seitenflächen 5. Nachdem die einzelnen Wicklungsgänge in einer Wicklung einer elektrischen Maschine in axialer Richtung der Wicklung zusammengepresst werden, stützen sich die benachbarten Mehrfachparallelleiter 1 der Wicklungsgänge an den Distanzplättchen 6 ab. Wäre die Höhe H_{D} der Distanzplättchen 6 kleiner als die Höhe H_{L} des Mehrfachparallelleiters 1 könnte das zu einer Verschiebung von Einzelleitern 3 in der Wicklung führen, was die Funktion der Wicklung beeinträchtigen oder sogar zerstören könnte.

Aus demselben Grund wird der Abstand zwischen zwei Distanzplättchen 6 am Mehrfachparallelleiter 1 in Längsrichtung x vorzugsweise so geplant, dass in der entstehenden Wicklung in axialer Richtung immer eine Überlappung der in axialer Richtung nebeneinander liegenden Distanzplättchen 6 vorhanden ist. Auf diese Weise kann sichergestellt werden, dass sich bei einer axialen Verspannung der Wicklung die einzelnen Wicklungsgänge an den Distanzplättchen 6 abstützen. Nachdem der Durchmesser der Wicklungsgänge vorab bekannt ist, kann die Anordnung der Distanzplättchen 6 einfach vorab geplant werden.

Die Breite B des Bandes 7 wird vorzugsweise kleiner gewählt als die Höhe H_{L} des Mehrfachparallelleiters 1, könnte aber ebenso gleich mit der Höhe H_{L} des Mehrfachparallelleiters 1 gewählt werden.

Zur Herstellung des Mehrfachparallelleiters 1 wird zuerst der Mehrfachparallelleiter 1 in bekannter Weise durch Verdrillen der Einzelleiter 3 hergestellt. Am verdrillten Mehrfachparallelleiter 1 wird dann seitlich das Band 7 mit den Distanzplättchen 6 angelegt und anschließend die Umwicklung 8 angebracht. Danach kann der Mehrfachparallelleiter 1 auf eine Trommel gewickelt werden und so verschifft werden oder einer Weiterverarbeitung zugeführt werden.

## Patentansprüche

1. Mehrfachparallelleiter mit einer Mehrzahl von verdrillten, isolierten Einzelleitern (3), wobei die Einzelleiter (3) in mehreren nebeneinander angeordneten Teilleiterbündeln (2) übereinander angeordnet sind, **dadurch gekennzeichnet, dass** an einer Seitenfläche (5) des Mehrfachparallelleiters (1) in Längsrichtung (x) des Mehrfachparallelleiters (1) ein Band (7) angelegt ist, wobei am Band (7) in Längsrichtung (x) verteilt Distanzplättchen (6) angeordnet sind, und der Mehrfachparallelleiter (1) mit dem Band (7) und den Distanzplättchen (6) mit einer Umwicklung (8) umwickelt ist, **dass**
- das Band (7) direkt an der Seitenfläche (5) des Mehrfachparallelleiters (1) anliegt und die Distanzplättchen (6) außenliegend angeordnet sind, wobei die Höhe (H_{D}) der Distanzplättchen (6) größer als die Breite (B) des Bands (7) ist, oder
- die Distanzplättchen (6) direkt an der Seitenfläche (5) des Mehrfachparallelleiters (1) anliegen und das Band (7) außenliegend angeordnet ist, wobei die Höhe (H_{D}) der Distanzplättchen (6) größer als die Breite (B) des Bands (7) ist, oder
- das Band (7) aus zumindest zwei Teilbändern (7', 7") zusammengesetzt ist und die Distanzplättchen (6) zwischen den Teilbändern (7', 7") angeordnet sind, wobei die Höhe (H_{D}) der Distanzplättchen (6) größer als die jeweilige Breite (B) der Teilbänder (7', 7") ist.

2. Mehrfachparallelleiter nach Anspruch 1, **dadurch gekennzeichnet, dass** die Höhe (H_{D}) der Distanzplättchen (6) der Höhe (H_{L}) des Mehrfachparallelleiters (1) entspricht.

3. Verfahren zur Herstellung eines Mehrfachparallelleiters (1) mit einer Mehrzahl von verdrillten, isolierten Einzelleitern (3) und mit Distanzplättchen (6), **dadurch gekennzeichnet, dass** ein Band (7) mit in Längsrichtung (x) verteilt angeordneten Distanzplättchen (6) zur Verfügung gestellt wird, wobei die Höhe (H_{D}) der Distanzplättchen (6) größer als die Breite (B) des Bands (7) ist **dass** das Band (7) mit den Distanzplättchen (6) derart an einer Seitenfläche (5) des Mehrfachparallelleiters (1) in Längsrichtung (x) angelegt wird,
- sodass das Band (7) direkt an der Seitenfläche (5) des Mehrfachparallelleiter (1) anliegt und die Distanzplättchen (6) außenliegend angeordnet sind oder
- die Distanzplättchen (6) direkt an der Seitenfläche (5) des Mehrfachparallelleiters (1) anliegen und das Band (7) außenliegend angeordnet ist,
**und dass** dann der Mehrfachparallelleiter (1) mit dem Band (7) und den Distanzplättchen (6) mit einer Umwicklung (8) umwickelt wird.

4. Verfahren zur Herstellung eines Mehrfachparallelleiters (1) mit einer Mehrzahl von verdrillten, isolierten Einzelleitern (3) und mit Distanzplättchen (6), **dadurch gekennzeichnet,** ein Band (7) mit in Längsrichtung (x) verteilt angeordneten Distanzplättchen (6) zur Verfügung gestellt wird, wobei das Band (7) auszumindest zwei Teilbändern (7', 7") zusammengesetzt ist und die Distanzplättchen (6) zwischen den Teilbändern (7', 7") angeordnet sind, wobei die Höhe (H_{D}) der Distanzplättchen (6) größer als die jeweilige Breite (B) der Teilbänder (7', 7") ist, **dass** das Band (7) mit den Distanzplättchen (6) an einer Seitenfläche (5) des Mehrfachparallelleiters (1) in Längsrichtung (x) angelegt wird, **und dass** dann der Mehrfachparallelleiter (1) mit dem Band (7) und den Distanzplättchen (6) mit einer Umwicklung (8) umwickelt wird.

5. Verwendung des Mehrfachparallelleiters (1) nach Anspruch 1 oder 2 zur Herstellung einer Wicklung einer elektrischen Maschine, wobei die Wicklung in axialer Richtung der Wicklung nebeneinander angeordnete Wicklungsgänge aufweist, die durch die Distanzplättchen (6) in axialer Richtung beabstandet sind und der Abstand der Distanzplättchen (6) am Band (7) in Längsrichtung (x) gewählt wird, sodass sich die Distanzplättchen (6) in axialer Richtung nebeneinander angeordneten Wicklungsgängen zumindest teilweise überlappen.

## Claims

1. Multiple parallel conductor comprising a plurality of twisted, insulated individual conductors (3), the individual conductors (3) being arranged above one another in a plurality of sub-conductor bundles (2) arranged next to one another, **characterized in that** a strip (7) is applied to a side surface (5) of the multiple parallel conductor (1) in the longitudinal direction (x) of the multiple parallel conductor (1), wherein spacer plates (6) are arranged on the strip (7) so as to be distributed in the longitudinal direction (x), and the multiple parallel conductor (1) with the strip (7) and the spacer plates (6) are wrapped with a wrapping (8), **in that**
- the strip (7) rests directly on the side surface (5) of the multiple parallel conductor (1) and the spacer plates (6) are arranged on the outside, wherein the height (H_{D}) of the spacer plates (6) is greater than the width (B) of the strip (7), or
- the spacer plates (6) rest directly on the side surface (5) of the multiple parallel conductor (1) and the strip (7) is arranged on the outside, wherein the height (H_{D}) of the spacer plates (6) is greater than the width (B) of the strip (7), or
- the strip (7) is composed of at least two partial strips (7', 7") and the spacer plates (6) are arranged between the partial strips (7', 7"), wherein the height (H_{D}) of the spacer plates (6) is in each case greater than the width (B) of the partial strips (7', 7").

2. Multiple parallel conductor according to claim 1, **characterized in that** the height (H_{D}) of the spacer plates (6) corresponds to the height (H_{L}) of the multiple parallel conductor (1).

3. Method for producing a multiple parallel conductor (1) with a plurality of twisted, insulated individual conductors (3) and comprising spacer plates (6), **characterized in that** a strip (7) having spacer plates (6) arranged so as to be distributed in the longitudinal direction (x) is provided wherein the width (H_{D}) of the spacer plates (6) being greater than the width (B) of the strip (7), **in that** the strip (7) having the spacer plates (6) is applied to a side surface (5) of the multiple parallel conductor (1) in the longitudinal direction (x) such that,
- the strip (7) rests directly on the side surface (5) of the multiple parallel conductor (1) and the spacer plates (6) are arranged on the outside, or
- the spacer plates (6) rest directly on the side surface (5) of the multiple parallel conductor (1) and the strip (7) is arranged on the outside,
and **in that** the multiple parallel conductor (1), together with the strip (7) and the spacer plates (6), is then wrapped with a wrapping (8).

4. Method for producing a multiple parallel conductor (1) with a plurality of twisted, insulated individual conductors (3) and spacer plates (6), **characterized in that** a strip (7) with spacer plates (6) arranged so as to be distributed in the longitudinal direction (x) is provided, wherein the strip (7) is composed of at least two partial strips (7', 7") and the spacer plates (6) are arranged between the partial strips (7', 7"), wherein the height (H_{D}) of the spacer plates (6) is in each case greater than the width (B) of the partial strips (7', 7"), **in that** the strip (7) with the spacer plates (6) is applied to a side surface (5) of the multiple parallel conductor (1) in the longitudinal direction (x), **and in that** the multiple parallel conductor (1) with the strip (7) and the spacer plates (6) is then wrapped with a wrapping (8).

5. Use of the multiple parallel conductor (1) according to either claim 1 or 2 for producing a winding of an electrical machine, wherein the winding has winding turns which are arranged next to one another in the axial direction of the winding and are spaced apart in the axial direction by the spacer plates (6), and the spacing of the spacer plates (6) on the strip (7) in the longitudinal direction (x) is selected such that the spacer plates (6) at least partially overlap in winding turns which are arranged next to one another in the axial direction.

## Revendications

1. Conducteur parallèle multiple comportant une pluralité de conducteurs individuels (3) torsadés isolés, les conducteurs individuels (3) étant disposés les uns au-dessus des autres en plusieurs faisceaux de conducteurs élémentaires (2) disposés les uns à côté des autres, **caractérisé en ce qu'une** bande (7) est appliquée sur une surface latérale (5) du conducteur parallèle multiple (1) dans la direction longitudinale (x) du conducteur parallèle multiple (1), des plaquettes d'espacement (6) étant réparties sur la bande (7) dans la direction longitudinale (x), et le conducteur parallèle multiple (1) comportant la bande (7) et les plaquettes d'espacement (6) étant entouré par une enveloppe (8), **en ce que**
- la bande (7) repose directement sur la surface latérale (5) du conducteur parallèle multiple (1) et les plaquettes d'espacement (6) sont disposées à l'extérieur, la hauteur (H_{D}) des plaquettes d'espacement (6) étant supérieure à la largeur (B) de la bande (7), ou
- les plaquettes d'espacement (6) reposent directement sur la surface latérale (5) du conducteur parallèle multiple (1) et la bande (7) est disposée à l'extérieur, la hauteur (H_{D}) des plaquettes d'espacement (6) étant supérieure à la largeur (B) de la bande (7), ou
- la bande (7) est composée d'au moins deux sous-bandes (7', 7") et les plaquettes d'espacement (6) sont disposées entre les sous-bandes (7', 7"), la hauteur (H_{D}) des plaquettes d'espacement (6) étant supérieure à la largeur (B) respective des sous-bandes (7', 7").

2. Conducteur parallèle multiple selon la revendication 1, **caractérisé en ce que** la hauteur (H_{D}) des plaquettes d'espacement (6) correspond à la hauteur (H_{L}) du conducteur parallèle multiple (1).

3. Procédé de fabrication d'un conducteur parallèle multiple (1) comportant une pluralité de conducteurs individuels (3) torsadés isolés et comportant des plaquettes d'espacement (6), **caractérisé en ce qu'une** bande (7) comportant des plaquettes d'espacement (6) réparties dans la direction longitudinale (x) est fournie, la hauteur (H_{D}) des plaquettes d'espacement (6) étant supérieure à la largeur (B) de la bande (7), **en ce que** la bande (7) comportant les plaquettes d'espacement (6) est appliquée sur une surface latérale (5) du conducteur parallèle multiple (1), dans la direction longitudinale (x),
- de sorte que la bande (7) repose directement sur la surface latérale (5) du conducteur parallèle multiple (1) et les plaquettes d'espacement (6) sont disposées à l'extérieur, ou
- que les plaquettes d'espacement (6) reposent directement sur la surface latérale (5) du conducteur parallèle multiple (1) et la bande (7) est disposée à l'extérieur,
**et en ce que** le conducteur parallèle multiple (1) comportant la bande (7) et les plaquettes d'espacement (6) est ensuite entouré par une enveloppe (8).

4. Procédé de fabrication d'un conducteur parallèle multiple (1) comportant une pluralité de conducteurs individuels (3) torsadés isolés et comportant des plaquettes d'espacement (6), **caractérisé en ce qu'une** bande (7) comportant des plaquettes d'espacement (6) réparties dans la direction longitudinale (x) est fournie, la bande (7) étant composée d'au moins deux sous-bandes (7', 7") et les plaquettes d'espacement (6) étant disposées entre les sous-bandes (7', 7"), la hauteur (H_{D}) des plaquettes d'espacement (6) étant supérieure à la largeur (B) respective des sous-bandes (7', 7"), **en ce que** la bande (7) comportant les plaquettes d'espacement (6) est appliquée sur une surface latérale (5) du conducteur parallèle multiple (1), dans la direction longitudinale (x), **et en ce que** le conducteur parallèle multiple (1) comportant la bande (7) et les plaquettes d'espacement (6) est ensuite entouré par une enveloppe (8).

5. Utilisation du conducteur parallèle multiple (1) selon la revendication 1 ou 2 pour la fabrication d'un enroulement d'une machine électrique, l'enroulement présentant des spires d'enroulement disposées les unes à côté des autres dans la direction axiale de l'enroulement et espacées dans la direction axiale par les plaquettes d'espacement (6), et la distance entre les plaquettes d'espacement (6) étant sélectionnée sur la bande (7) dans la direction longitudinale (x), de sorte que les plaquettes d'espacement (6) chevauchent au moins partiellement les spires d'enroulement disposées les unes à côté des autres dans la direction axiale.
